# EUROPÄISCHE PATENTSCHRIFT

(11) **EP 2 733 316 B1**
(45) Veröffentlichungstag und Bekanntmachung des Hinweises auf die Patenterteilung: **24.06.2020**
(21) Anmeldenummer: 13185769.0
(22) Anmeldetag: 24.09.2013
(51) Int. Cl.: F01K 13/00, F01K 25/08

(54) **Netzwerk für das Transportieren von Wärme**
Network for the transport of heat
Réseau pour le transport de chaleur

(30) Priorität: 25.09.2012 DE 102012217339
(43) Veröffentlichungstag der Anmeldung: 21.05.2014
(73) Patentinhaber: Dürr Systems AG, 74321 Bietigheim-Bissingen (DE); Stadtwerke Karlsruhe GmbH, 76127 Karlsruhe (DE)
(72) Erfinder: Fink, Jochen, 71634 Ludwigsburg (DE); Rink, Manuel, 76227 Karlsruhe (DE)
(74) Vertreter: Gauss, Nikolai

(56) Entgegenhaltungen:
- WO-A1-2006/104490
- WO-A1-2009/045196
- WO-A2-2010/127932
- US-A1- 2010 242 479

## Beschreibung

Die Erfindung betrifft ein Netzwerk für das Transportieren von Wärme von einer Wärmequelle zu einem Wärmeverbraucher, mit einer Hochtemperaturseite und mit einer Niedertemperaturseite, mit einem Kreislaufsystem, das einen auf der Hochtemperaturseite ausgebildeten Wärmeträgerfluid-Vorlauf für das Transportieren von Wärme von der Wärmequelle zu dem Wärmeverbraucher durch Bewegen von Wärmeträgerfluid aufweist und das einen auf der Niedertemperaturseite ausgebildeten Wärmeträgerfluid-Rücklauf für das Transportieren von Restwärme von dem Wärmeverbraucher zu der Wärmequelle durch Bewegen von Wärmeträgerfluid aufweist. Darüber hinaus betrifft die Erfindung ein Verfahren für das Transportieren von Wärme von einer Wärmequelle zu einem Wärmeverbraucher mit einem derartigen Netzwerk.

Derartige Netzwerke werden eingesetzt, um z. B. die Abwärme eines Wärmekraftwerks oder einer chemischen Anlage z. B. auf eine Heizungsanlage für das Heizen eines Gebäudes zu übertragen.

Hier tritt häufig der Fall auf, dass die Abwärme des Wärmekraftwerks oder der chemischen Anlage bei einer ersten für das Kraftwerk oder die Anlage charakteristischen Temperatur T₁ in das Netzwerk eingespeist wird, jedoch nur bei einer von dieser charakteristischen Temperatur T₁ verschiedenen, niedrigeren zweiten Temperatur T₂ < T₁ der Heizungsanlage zugeführt werden kann.

In herkömmlichen Netzwerken gibt es deshalb Einrichtungen für das Abführen von Wärme aus einem Wärmeträgerfluid, das in einem Hochtemperatur-Abschnitt des Netzwerks zu einer Schnittstelle bewegt wird. An dieser Schnittstelle wird dann die Wärme in einen Niedertemperatur-Abschnitt des Netzwerks übertragen, z. B. um sie zu einer Heizungsanlage zu leiten.

Diese Einrichtungen für das Abführen von Wärme sind in der Regel als Kühleinrichtungen ausgebildet, z. B. als Luftkühler. Die damit abgeführte Wärme ist Verslustwärme, die den Wirkungsgrad eines aus einem Wärmekraftwerk oder einer chemischer Anlage, dem Netzwerk und einem Wärmeverbraucher aufgebauten Gesamtsystems verringert.

In der WO 2009/045196 A1 ist ein Netzwerk für das Übertragen von Wärme von einer Wärmequelle zu einem Wärmeverbraucher beschrieben, das ein RC-System mit einem Arbeitsmittelkreislauf enthält, in dem ein Arbeitsmittel geführt ist. Die Wärme der Wärmequelle wird hier auf das Arbeitsmittel des RC-Systems übertragen, das diese Wärme mit einem elektrischen Generator in elektrische Energie überführt. Die bei der elektrischen Energieerzeugung anfallende Restwärme in dem OCT-System wird dabei an den Wärmeverbraucher in dem Netzwerk abgeführt.

Aus der WO 2006/104490 A1 ist ein Netzwerk mit einem Dampferzeuger bekannt, der mit der Wärme aus einer Wärmequelle gespeist wird. Der Dampferzeuger erzeugt Dampf, der durch ein erstes ORC-System für das Erzeugen von elektrischer Energie geführt wird, das mit einem weiteren ORC-System gekoppelt ist, mit dem elektrische Energie erzeugt werden kann.

Die WO 2010/127932 A2 und die US 2010/0242479 A1 beschreiben jeweils Netzwerke, in denen mittels eines ORC-Systems Wärme aus einer Wärmequelle auf einen Wärmeverbraucher übertragen wird.

Aufgabe der Erfindung ist es, ein Netzwerk bereitzustellen, in dem die Wärme, die von einer Wärmequelle bei einer ersten Temperatur T₁ in das Netzwerk eingespeist wird, bei einer zweiten Temperatur T₂ < T₁ einem Wärmeverbraucher so zugeführt werden kann, dass dabei keine Energie oder nur wenig Energie verloren geht.

Diese Aufgabe wird durch ein Netzwerk und ein Verfahren für das Transportieren von Wärme mit den Merkmalen des Anspruchs 1 und den Merkmalen des Anspruchs 12 gelöst. Vorteilhafte Ausführungsformen der Erfindung sind in den abhängigen Ansprüchen angegeben.

Das erfindungsgemäße Netzwerk enthält ein mit dem Wärmeträgerfluid-Vorlauf der Hochtemperaturseite und dem Wärmeträgerfluid-Rücklauf der Niedertemperaturseite thermisch gekoppeltes RC, das einen mit Wärme von in dem Wärmeträgerfluid-Vorlauf geführten Wärmeträgerfluid gespeisten Verdampfer aufweist und das einen an den Wärmeträgerfluid-Rücklauf angeschlossenen Kondensator für ein in einem an eine Wärmekraftmaschine angeschlossenen Arbeitsmittelkreislauf geführtes Arbeitsmittel zum Umwandeln von Wärme in mechanische Energie mit einem thermodynamischen Kreisprozess hat, der auf das in dem Wärmeträgerfluid-Rücklauf geführte Wärmeträgerfluid Restwärme überträgt.

Auf diese Weise ist es insbesondere möglich, die bei dem Betrieb eines Netzwerks auftretende Verlustwärme zu verringern und ein Netzwerk für das Übertragen von Wärme kostengünstig zu betreiben.

Unter einem RC-System (RC = Rankine Cycle) im Sinne der Erfindung wird dabei eine Anlage verstanden, in der mit einem thermodynamischen Kreisprozess unter Verwendung eines in einem Kreislauf geführten Arbeitsmittels, z. B. Wasser bzw. Wasserdampf, Wärme in mechanische Energie gewandelt wird.

Die Erfindung nutzt aus, dass mit der Temperaturdifferenz zwischen der Hochtemperaturseite und der Niedertemperaturseite in einem Netzwerk für das Transportieren von Wärme ein thermodynamischer Kreisprozess betrieben werden kann, mit dem sich in das Netzwerk eingespeiste überschüssige Wärme in mechanische Energie bzw. elektrische Energie verwandeln lässt. Der Erfindung liegt dabei die Erkenntnis zugrunde, dass auch wenn der Wirkungsgrad für einen thermodynamischen Kreisprozess bei den für Fernwärmenetze üblichen Temperaturdifferenzen zwischen der Hochtemperaturseite und der Niedertemperaturseite vergleichsweise gering ist, mit dieser Maßnahme die in das Fernwärmenetz eingespeiste Wärmeenergie vollständig genutzt werden kann und keine oder nur wenig Verlustwärme abgeführt werden muss, um die Temperatur einzustellen, bei der die in dem Netzwerk transportierte Wärme auf einen Wärmeverbraucher übertragen wird.

Der Verdampfer des RC-Systems in dem Netzwerk ist dabei bevorzugt über einen Kreislauf für ein Wärmeträgermittel mit Wärme aus der Wärmequelle gespeist, auf das dem Arbeitsmittel in dem Kondensator entzogene Wärme übertragen wird. Alternativ hierzu ist es auch möglich, dass der Verdampfer über einen Kreislauf für ein Wärmeträgermittel mit Wärme aus der Wärmequelle gespeist wird, der mittels eines Wärmetauschers mit einem weiteren dem Wärmeverbraucher Wärme zuführenden Kreislauf für ein Wärmeträgermittel gekoppelt ist, auf das die dem Arbeitsmittel in dem Kondensator entzogene Wärme übertragen wird. Hier ist es günstig, wenn eine Einrichtung für das Kühlen des dem Wärmetauscher zugeführten Wärmeträgermittels vorgesehen ist. Diese Einrichtung für das Kühlen kann z. B. ein Luftkühler sein. Als Wärmeträgermittel in dem Kreislauf ist z. B. Wasser geeignet.

Der Wärmeträgerfluid-Vorlauf und der Wärmeträgerfluid-Rücklauf können insbesondere als ein geschlossener Wärmeträgerfluid-Kreislauf ausgebildet sein, der mit dem Verdampfer und mit dem Kondensator thermisch gekoppelt ist.

Es ist allerdings auch möglich, dass der Wärmeträgerfluid-Vorlauf und der Wärmeträgerfluid-Rücklauf in einem Kreislaufsystem ausgebildet sind, das einen mit dem Verdampfer thermisch gekoppelten ersten Wärmeträgerfluid-Kreislauf und einen mit dem ersten Kreislauf mittels eines Wärmetauschers thermisch gekoppelten zweiten Wärmeträgerfluid-Kreislauf für das Aufnehmen von Restwärme aus den Kondensator enthält.

Günstig ist es, wenn das RC-System einen über die Hochtemperaturseite mit Wärme aus der Wärmequelle gespeisten Vorwärmer enthält, der das dem Verdampfer zugeführte Arbeitsmittel vorwärmt.

Bevorzugt ist das RC-System als ein ORC-System (ORC = Organic Rankine Cycle) mit einem Arbeitsmittelkreislauf ausgebildet, der als Arbeitsmittel ein organisches Medium, z. B. Pentan, Butan, Toluol, Silikonöl oder auch Ammoniak enthält, deren Verdampfungstemperatur bei Atmosphärendruck niedriger ist als die Verdampfungstemperatur von Wasser. In einem ORC-System wird das Arbeitsmittel mit Druck beaufschlagt. In der Regel enthält das ORC-System hierfür eine Pumpe. Das mit Druck beaufschlagte Arbeitsmittel wird dann in einem Verdampfer erwärmt. Dabei wird das Arbeitsmittel verdampft bzw. überhitzt. Das verdampfte bzw. überhitzte Arbeitsmittel wird dann zu einer Dampfturbine geführt. Hier wird es unter Erzeugung von mechanischer Energie auf einen niedrigeren Druck entspannt und anschließend kondensiert. In dem Arbeitsmittelkreislauf der ORC-Anlage wird das Arbeitsmittel dann wieder mit Druck beaufschlagt und wieder dem Verdampfer zugeführt, wo es von neuem erwärmt und dann wieder verdampft wird. Es sei bemerkt, dass in einer ORC-Anlage als Arbeitsmittel auch Medien eingesetzt werden können, deren Verdampfungstemperatur höher ist als diejenige von Wasser. ORC-Anlagen können für das Erzeugen von mechanischer oder elektrischer Energie aus Wärme insbesondere dann vorteilhaft eingesetzt werden, wenn das zur Verfügung stehende Temperaturgefälle zwischen einer Wärmequelle und einer Wärmesenke zu niedrig ist, um eine Wärmekraftmaschine, etwa eine Turbine, mit Wasserdampf zu betreiben. Vorteilhaft ist es insbesondere, wenn das Netzwerk mehrere RC-Systeme hat, die jeweils einen über die Hochtemperaturseite mit Wärme aus der Wärmequelle gespeisten Verdampfer enthalten und einen für das Abführen von Wärme an die Niedertemperaturseite angeschlossenen Kondensator für ein in einem Arbeitsmittelkreislauf geführtes Arbeitsmittel zum Umwandeln von Wärme in mechanische Energie mit einem thermodynamischen Kreisprozess aufweisen.

Das Netzwerk kann insbesondere ein Fernwärmenetz sein, etwa um ein Blockheizkraftwerk mit der Abwärme aus einem Wärmekraftwerk für das Erzeugen von elektrischer Energie zu speisen.

Die Erfindung erstreckt sich auch auf ein Verfahren für das Transportieren von Wärme von einer Wärmequelle zu einem Wärmeverbraucher in einem Netzwerk für das Transportieren von Wärme von einer Wärmequelle zu einem Wärmeverbraucher mittels Wärmeträgerfluid. Das Netzwerk kann den vorstehend beschriebenen Aufbau haben. Das Netzwerk hat eine Hochtemperaturseite, die einen die Wärmequelle mit dem Wärmeverbraucher verbindenden Wärmeträgerfluid-Vorlauf aufweist, durch den dem Wärmeverbraucher die Wärme von der Wärmequelle zugeführt wird, und es enthält eine Niedertemperaturseite, die einen den Wärmeverbraucher mit der Wärmequelle verbundenen Wärmeträgerfluid-Rücklauf hat, durch den Restwärme von dem Wärmeverbraucher zu der Wärmequelle transportiert wird. Dabei wird die Temperatur T des Wärmeträgerfluids in dem Wärmeträger-Vorlauf abgesenkt, indem Wärme von in dem Wärmeträgerfluid-Vorlauf geführtem Wärmeträgerfluid auf ein RC-System aus dem übertragen wird, das elektrische und/oder mechanische Energie bereitstellt.

Eine Idee der Erfindung ist es dabei insbesondere, dass das RC-System dem in dem Wärmeträgerfluid-Rücklauf geführtem Wärmeträgerfluid Restwärme zuführt. Das RC-System kann auch einen mit Wärme von in dem Wärmeträgerfluid-Vorlauf geführten Wärmeträgerfluid gespeisten Verdampfer enthalten und einen an den Wärmeträgerfluid-Rücklauf angeschlossenen Kondensator für ein in einem an eine Wärmekraftmaschine angeschlossenen Arbeitsmittelkreislauf geführtes Arbeitsmittel zum Umwandeln von Wärme in mechanische Energie mit einem thermodynamischen Kreisprozess haben.

Im Folgenden wird die Erfindung anhand der in der Zeichnung in schematischer Weise dargestellten Ausführungsbeispiele näher erläutert.

Es zeigen:
- Fig. 1: ein Fernwärmenetzwerk, das an eine chemische Anlage angeschlossen ist und eine Heizungsanlage mit Wärme versorgt;
- Fig. 2: ein Fernwärmenetzwerk, das einem Blockheizkraftwerk die Abwärme von einem Heizkraftwerk zuführt; und
- Fig. 3: ein weiteres Fernwärmenetzwerk, das eine Wärmequelle mit einem Wärmeverbraucher verbindet.

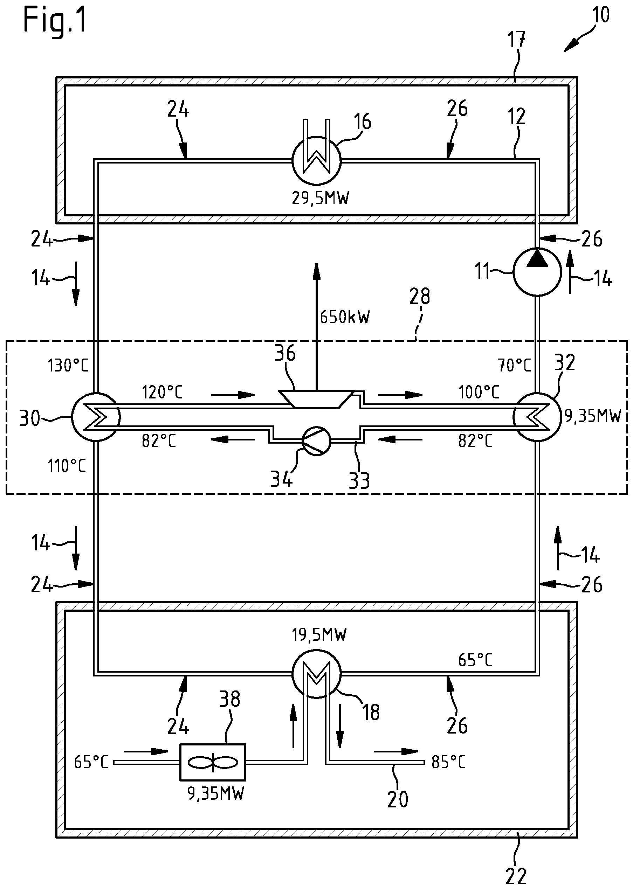

Das in der Fig. 1 gezeigte Fernwärmenetzwerk 10 hat eine Ringleitung 12, in der flüssiges Wärmeträgermittel in Form von Wasser in der mit den Pfeilen 14 kenntlich gemachten Richtung mittels einer Förderpumpe 11 von einem als Wärmequelle wirkenden Wärmetauscher 16 in einer chemischen Anlage 17 angeschlossen ist, zu einem als Wärmeverbraucher wirkenden Wärmetauscher 18 und zurück in einem Kreislauf geführt ist. Die Abwärme der chemischen Anlage wird über den Wärmetauscher 16 an das Wärmeträgermittel in der Ringleitung 12 abgegeben. Der Wärmetauscher 18 überträgt Wärme von dem Wärmeträgermittel in der Ringleitung 12 auf einen Heizkreislauf 20 in einer als Wärmeverbraucher wirkenden Heizungsanlage 22.

Das Netzwerk 10 hat eine Hochtemperaturseite 24, die den Wärmetauscher 16 in der Richtung der Pfeile 14 mit dem Wärmetauscher 18 verbindet. Das Netzwerk 10 enthält eine Niedertemperaturseite 26, über die Wärmeträgermittel, das in dem Wärmetauscher 18 Wärme an den Heizkreislauf 20 abgegeben hat, mit der darin enthaltenen Restwärme zu dem Wärmetauscher 16 geführt wird.

Das Netzwerk 10 enthält ein ORC-System 28 mit einem Verdampfer 30 und einem Kondensator 32. Der Verdampfer 30 ist über die Hochtemperaturseite 24 des Netzwerks 10 mit Wärme gespeist, die dem Netzwerk mittels des Wärmetauschers 16 zugeführt wird. In dem ORC-System 28 gibt es einen Kondensator 32, der an die Niedertemperaturseite des ORC-Systems 28 angeschlossen ist und der die Kondensationswärme eines ORC-Arbeitsmittels, z. B. Pentan, in dem ORC-System 28 auf das Wärmeträgermittel in der Ringleitung 12 überträgt. Das ORC-System 28 enthält eine Arbeitsmittelpumpe 34, die das in dem Kondensator 32 kondensierte Arbeitsmittel in einem Arbeitsmittelkreislauf 33 zu dem Verdampfer 30 fördert. In dem ORC-System 28 gibt es eine als Turbine 36 ausgebildete Wärmekraftmaschine, die auf ihrer Druckseite mit Arbeitsmitteldampf aus dem Verdampfer beaufschlagt ist und die das entspannte Arbeitsmittel dem Kondensator 32 zuführt.

Die Fig. 1 zeigt das Netzwerk 10 in einem Betriebszustand, in dem das Wärmeträgermittel in dem Wärmetauscher 16 der Ringleitung 12 auf eine Temperatur T₁ = 130°C erwärmt wird. Aufgrund der dem Wärmeträgermittel in der Ringleitung 12 mittels des Verdampfers 30 entzogenen Wärme wird dessen Temperatur abgesenkt. Das Wärmeträgermittel wird dem Wärmetauscher 18 mit einer Temperatur T'₁ = 110°C zugeführt und dort auf die Temperatur T₂'= 65°C abgekühlt. Mittels des Kondensators 32 in dem ORC-System 28 wird das Wärmeträgermittel dann auf die Temperatur T₂ = 70°C erwärmt, mit der es dem Wärmetauscher 16 wieder zugeführt wird.

Bei dem in der Fig. 1 gezeigten Betriebszustand wird dem Netzwerk 10 mittels des Wärmetauschers 16 mit der Rate R₁ = 29,5 MW Wärme zugeführt. Dabei entzieht der Verdampfer 30 dem Wärmeträgermittel in der Hochtemperaturseite 24 des Netzwerks 10 mit der Rate R₂ = 10 MW Wärme und erhöht die Temperatur T des Arbeitsmittels von dem Wert T_{A1} = 82°C auf den Wert T_{A2} = 120°C. Bei dem Entspannen des Arbeitsmittels in der Turbine 36 wird die Arbeitsmitteltemperatur auf den Wert T_{A3} = 100°C abgesenkt, wobei mit der Rate R₃ = 650 KW mechanische Energie für die Stromerzeugung freigesetzt wird. Der Kondensator 32 bewirkt, dass sich die Temperatur des Arbeitsmittels in dem ORC-System 28 von dem Wert T_{A3} = 100°C auf den Wert T_{A1} = 82°C verringert, wodurch das ORC-System 28 mit der Rate R₄ = 9,35 MW der Niedertemperaturseite 26 des Netzwerks Wärme zuführt.

Über den Wärmetauscher 18 überträgt das Netzwerk 10 mit der Rate R₅ = 19,5 MW Wärme auf den Heizkreislauf 20. Dabei wird die Temperatur T des Wärmeträgermittels, das mittels eines Luftkühlers 38 gegebenenfalls gekühlt wird, von dem Wert T_{H1}= 65°C auf den Wert T_{H2}= 85°C angehoben.

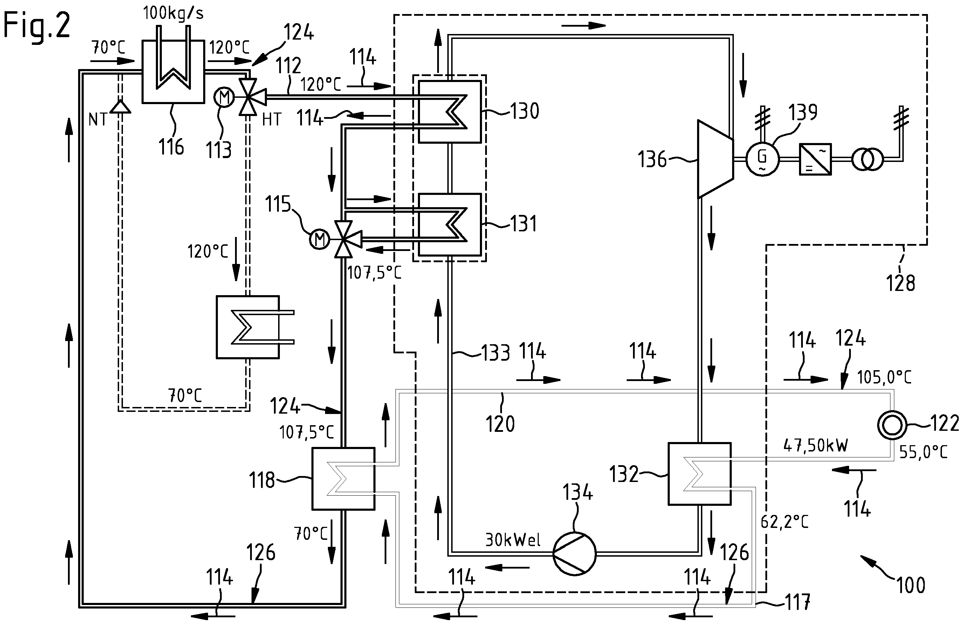

Die Fig. 2 zeigt ein Fernwärmenetzwerk 100, das eine Ringleitung 112 hat, in der flüssiges Wärmeträgermittel in Form von Wasser in der mit den Pfeilen 114 kenntlich gemachten Richtung mittels einer nicht weiter gezeigten Förderpumpe von einer als Heizkraftwerk ausgebildeten Wärmequelle mit einem Wärmetauscher 116 durch motorisch verstellbare 3-Wegeventile 113, 115 über einen Verdampfer 130 und einen Vorwärmer 131 für ein in einem Arbeitsmittelkreislauf 133 geführtes Arbeitsmittel in einem ORC-System 128 zu einem Wärmetauscher 118 und zurück in einem Kreislauf bewegt wird.

In dem Fernwärmenetzwerk 100 gibt es eine Ringleitung 117, die mittels des Wärmetauschers 118 mit der Ringleitung 112 thermisch gekoppelt ist. In der Ringleitung 117 wird mit einer nicht weiter gezeigten Förderpumpe in einem weiteren Kreislauf Wasser als Wärmeträgermittel zirkuliert, das die Wärme an einen als Blockheizkraftwerk ausgebildeten Wärmeverbraucher 122 abgibt.

Das Fernwärmenetzwerk 100 hat eine Hochtemperaturseite 124, die den Wärmetauscher 116 in der Richtung der Pfeile 114 mit dem Wärmetauscher 118 verbindet. Das Fernwärmenetzwerk 100 weist eine Niedertemperaturseite 126 auf, über die Wärmeträgermittel, das in dem Wärmetauscher 118 Wärme an den Heizkreislauf 120 abgegeben hat, mit der darin enthaltenen Restwärme zu dem Wärmetauscher 116 geführt wird.

Der Verdampfer 130 und der Vorwärmer 131 des ORC-Systems 128 ist über die Hochtemperaturseite 124 des Netzwerks 100 mit Wärme gespeist, die das Netzwerk 100 über den Wärmetauscher 116 erhält. Der Kondensator 132 ist mit der Ringleitung 117 thermisch gekoppelt und gibt die Kondensationswärme des Arbeitsmittels in dem ORC-System 128 auf das Wärmeträgermittel in der Ringleitung 117 ab. Das ORC-System 128 enthält eine Arbeitsmittelpumpe 134, die das in dem Kondensator 132 kondensierte Arbeitsmittel zu dem Verdampfer 130 fördert. In dem ORC-System 128 gibt es eine Turbine 136, die auf ihrer Druckseite mit Arbeitsmitteldampf aus dem Verdampfer beaufschlagt ist und die das entspannte Arbeitsmittel dem Kondensator 132 zuführt. Die Turbine 136 treibt einen Generator 139 an, der eine elektrische Leistung von z. B. P = 240 kW zur Verfügung stellt.

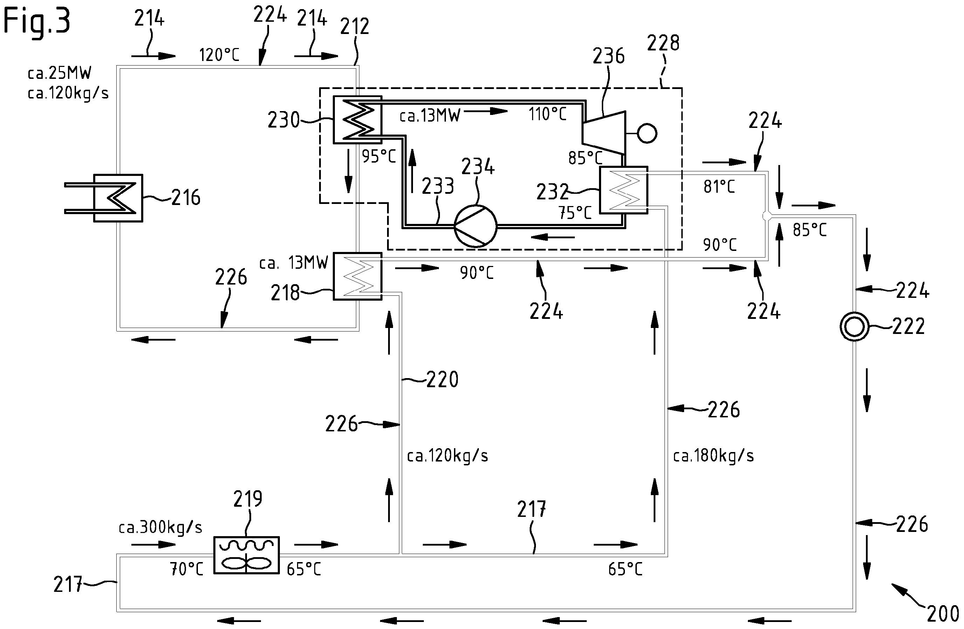

Die Fig. 3 zeigt ein weiteres Fernwärmenetzwerk 200, das eine Ringleitung 212 hat, in der flüssiges Wärmeträgermittel in Form von Wasser in der mit den Pfeilen 214 kenntlich gemachten Richtung mittels einer nicht weiter gezeigten Förderpumpe von einer Wärmequelle 216 über einen Verdampfer 230 für ein in einem Arbeitsmittelkreislauf 233 geführtes Arbeitsmittel in einem ORC-System 228 zu einem Wärmetauscher 218 und zurück in einem Kreislauf bewegt wird.

In dem Fernwärmenetzwerk 200 gibt es ein Ringleitungssystem 217, das mittels des Wärmetauschers 218 mit der Ringleitung 212 thermisch gekoppelt ist. In das Ringleitungssystem 217 wird mit einer nicht weiter gezeigten Förderpumpe in einem weiteren Kreislauf Wasser als Wärmeträgermittel zirkuliert, das die Wärme an einen Wärmeverbraucher 222 abgibt.

Das Fernwärmenetzwerk 200 hat eine Hochtemperaturseite 224, die den Wärmetauscher 216 in der Richtung der Pfeile 214 mit dem Wärmetauscher 218 verbindet. Das Netzwerk 200 weist außerdem eine Niedertemperaturseite 226 auf, über die Wärmeträgermittel, das in dem Wärmetauscher 218 Wärme an den Heizkreislauf 220 abgegeben hat, mit der darin enthaltenen Restwärme zu dem Wärmetauscher 216 geführt wird.

Der Verdampfer 230 und der nicht dargestellte Vorwärmer 231 des ORC-Systems 228 ist über die Hochtemperaturseite 224 des Netzwerks 200 mit Wärme gespeist, die das Netzwerk 200 über den Wärmetauscher 216 erhält. Der Kondensator 232 ist mit der Ringleitung 217 thermisch gekoppelt und gibt die Kondensationswärme des Arbeitsmittels in dem ORC-System 228 auf das Wärmeträgermittel in dem Ringleitungssystem 217 ab. Das ORC-System 228 enthält eine Arbeitsmittelpumpe 234, die das in dem Kondensator 232 kondensierte Arbeitsmittel zu dem Verdampfer 230 fördert. In dem ORC-System 228 gibt es wiederum eine Turbine 236, die auf ihrer Druckseite mit Arbeitsmitteldampf aus dem Verdampfer beaufschlagt ist und die das entspannte Arbeitsmittel dem Kondensator 232 zuführt. Die Turbine 236 treibt wiederum einen Generator an.

Das Ringleitungssystem 217 enthält einen Luftkühler 219, der dazu dient, die Temperatur des in dem Ringleitungssystem 217 geführten Wärmeträgerfluids einzustellen, das durch den Wärmetauscher 218 und den Kondensator 232 geführt wird. Das Ringleitungssystem 217 ist derart ausgelegt, dass dem darin zirkulierenden Wärmeträgermittel in dem Wärmetauscher 218 etwa 2/5 der Wärme zugeführt wird, die mittels des Ringleitungssystems 217 auf den Wärmeverbraucher 222 übertragen wird. Der übrige Anteil der Wärme, die mittels des Ringleitungssystems 217 dem Wärmeverbraucher 222 zugeführt wird, d. h. etwa 3/5, wird in dieses über den Kondensator 232 des ORC-Systems eingespeist.

Zusammenfassend sind insbesondere folgende Merkmale der Erfindung wie sie alleine durch die anhängenden unabhängigen Ansprüche definiert ist, festzuhalten: Ein Netzwerk 10, 100, 200 für das Transportieren von Wärme von einer Wärmequelle 16, 116, 216 zu einem Wärmeverbraucher 22, 122, 222 mittels Wärmeträgerfluid hat eine Hochtemperaturseite 24, 124, 224, die einen die Wärmequelle 16, 116, 216 mit dem Wärmeverbraucher 22, 122, 222 verbindenden Wärmeträgerfluid-Vorlauf aufweist, durch den dem Wärmeverbraucher 22, 122, 222 die Wärme von der Wärmequelle 16, 116, 216 zugeführt wird. Das Netzwerk 10, 100, 200 hat eine Niedertemperaturseite 26, 126, 226, die einen den Wärmeverbraucher 22, 122, 222 mit der Wärmequelle 16, 116, 216 verbindenden Wärmeträgerfluid-Rücklauf aufweist, durch den Restwärme von dem Wärmeverbraucher 22, 122, 222 zu der Wärmequelle 16, 116, 226 transportiert wird. In dem Netzwerk 10, 100, 200 gibt es ein mit dem Wärmeträgerfluid-Vorlauf der Hochtemperaturseite 24, 124, 224 und dem Wärmeträgerfluid-Rücklauf der Niedertemperaturseite 26, 126, 226 thermisch gekoppeltes RC-System 28, 128, 228, das einen mit Wärme von in dem Wärmeträgerfluid-Vorlauf geführten Wärmeträgerfluid gespeisten Verdampfer 30, 130, 230 enthält und das einen an den Wärmeträgerfluid-Rücklauf angeschlossenen Kondensator 32, 132, 232 für ein in einem an eine Wärmekraftmaschine 36, 136, 236 angeschlossenen Arbeitsmittelkreislauf 33, 133, 233 geführtes Arbeitsmittel zum Umwandeln von Wärme in mechanische Energie mit einem thermodynamischen Kreisprozess hat, der auf das in dem Wärmeträgerfluid-Rücklauf geführte Wärmeträgerfluid Restwärme überträgt.

### Bezugszeichenliste

- 10, 100, 200: Netzwerk/Fernwärmenetzwerk
- 11: Förderpumpe
- 12, 112; 212: Ringleitung
- 14,114, 214: Pfeil
- 16, 116, 216: Wärmequelle, Wärmetauscher
- 17, 117, 217: Anlage, Ringleitung, Ringleitungssystem
- 18, 118, 218: Wärmetauscher
- 20, 120, 220: Heizkreislauf
- 22, 122, 222: Heizungsanlage, Wärmeverbraucher
- 24, 124, 224: Hochtemperaturseite
- 26, 126, 226: Niedertemperaturseite
- 28, 128, 228: ORC-System
- 30, 130, 230: Verdampfer
- 32, 132, 232: Kondensator
- 33, 133, 233: Arbeitsmittelkreislauf
- 34, 134, 234: Arbeitsmittelpumpe
- 36, 136, 236: Turbine, Wärmekraftmaschine
- 38, 219: Luftkühler
- 113, 115: 3-Wegeventile
- 131, 231: Vorwärmer
- 139: Generator

## Patentansprüche

1. Netzwerk (10, 100, 200) für das Transportieren von Wärme von einer Wärmequelle (16,116, 216) zu einem Wärmeverbraucher (22,122, 222)
mit einer Hochtemperaturseite (24, 124, 224) und mit einer Niedertemperaturseite (26, 126, 226),
mit einem Kreislaufsystem, das einen auf der Hochtemperaturseite (24, 124, 224) ausgebildeten Wärmeträgerfluid-Vorlauf für das Transportieren von Wärme von der Wärmequelle (16,116, 216) zu dem Wärmeverbraucher (22,122, 222) durch Bewegen von Wärmeträgerfluid aufweist und das einen auf der Niedertemperaturseite (26, 126, 226) ausgebildeten Wärmeträgerfluid-Rücklauf für das Transportieren von Restwärme von dem Wärmeverbraucher (22,122, 222) zu der Wärmequelle (16,116, 216) durch Bewegen von Wärmeträgerfluid aufweist,
**gekennzeichnet durch**
ein RC-System (28, 128, 228), das einen an eine Wärmekraftmaschine (36, 136, 236) angeschlossenen Arbeitsmittelkreislauf (33, 133, 233) aufweist, in dem ein Arbeitsmittel zum Umwandeln von Wärme in mechanische Energie mit einem thermodynamischen Kreisprozess geführt ist, und das einen Verdampfer (30, 130, 230) für das Verdampfen des Arbeitsmittels und einen Kondensator (32, 132, 232) für das Kondensieren des Arbeitsmittels enthält, wobei
der Verdampfer (30, 130, 230) für das Übertragen von Wärme von in dem Wärmeträgerfluid-Vorlauf geführtem Wärmeträgerfluid auf das Arbeitsmittel mit dem Wärmeträgerfluid-Vorlauf thermisch gekoppelt ist und der Kondensator (32, 132, 232) für das Übertragen von Restwärme auf in dem Wärmeträgerfluid-Rücklauf geführtem Wärmeträgerfluid von dem Arbeitsmittel mit dem Wärmeträgerfluid-Rücklauf thermisch gekoppelt ist.

2. Netzwerk nach Anspruch 1, **dadurch gekennzeichnet, dass** das Kreislaufsystem einen mit dem Verdampfer (30) und mit dem Kondensator (32) thermisch gekoppelten, geschlossenen Wärmeträgerfluid-Kreislauf aufweist, der für das Aufnehmen von Wärme mit der Wärmequelle (16) verbunden ist der für das Abgeben von Wärme mit dem Wärmeverbraucher (22) verbunden ist.

3. Netzwerk nach Anspruch 1, **dadurch gekennzeichnet, dass** das Kreislaufsystem einen mit dem Verdampfer (130, 230) thermisch gekoppelten ersten Wärmeträgerfluid-Kreislauf und einen mit dem ersten Kreislauf mittels eines Wärmetauschers (118, 218) thermisch gekoppelten zweiten Wärmeträgerfluid-Kreislauf für das Aufnehmen von Restwärme aus den Kondensator (132, 232) enthält.

4. Netzwerk nach Anspruch 3, **dadurch gekennzeichnet, dass** das RC-System (129) einen über die Hochtemperaturseite (124) mit Wärme aus der Wärmequelle (116) gespeisten Vorwärmer (131) enthält, der das dem Verdampfer zugeführte Arbeitsmittel vorwärmt.

5. Netzwerk nach Anspruch 3 oder 4, **gekennzeichnet durch** eine Einrichtung (219) für das Kühlen des dem Wärmetauscher (218) zugeführten Wärmeträgerfluids.

6. Netzwerk nach Anspruch 5, **dadurch gekennzeichnet, dass** die Einrichtung für das Kühlen ein Luftkühler (219) ist.

7. Netzwerk nach einem der Ansprüche 1 bis 6, **dadurch gekennzeichnet, dass** in dem Kreislaufsystem als ein Wärmeträgerfluid Wasser geführt ist.

8. Netzwerk nach einem der Ansprüche 1 bis 7, **dadurch gekennzeichnet, dass** das RC-System ein ORC-System (28, 128, 228) mit einem Arbeitsmittelkreislauf (33, 133, 233) ist, der als Arbeitsmittel eine organische Flüssigkeit enthält, deren niedrigeren Verdampfungstemperatur bei Atmosphärendruck niedriger ist als die Verdampfungstemperatur von Wasser.

9. Netzwerk nach einem der Ansprüche 1 bis 8, **gekennzeichnet durch** mehrere RC-Systeme (28, 128, 228), die jeweils einen über die Hochtemperaturseite (24, 124, 224) mit Wärme aus der Wärmequelle (16, 116, 216) gespeisten Verdampfer (32, 132, 232) enthalten und einen für das Abführen von Wärme an die Niedertemperaturseite (26, 126, 226) angeschlossenen Kondensator (30, 130, 230) für ein in einem Arbeitsmittelkreislauf geführtes Arbeitsmittel zum Umwandeln von Wärme in mechanische Energie mit einem thermodynamischen Kreisprozess aufweisen.

10. Als Fernwärmenetzwerk (10, 100, 200) ausgebildetes Netzwerk gemäß einem der Ansprüche 1 bis 9.

11. Fernwärmenetzwerk (100) gemäß Anspruch 10 mit einer als Wärmekraftwerk ausgebildeten Wärmequelle.

12. Verfahren für das Transportieren von Wärme von einer Wärmequelle (16,116, 216) zu einem Wärmeverbraucher (22,122, 222) umfassend:
Bereitstellen eines Netzwerks (10, 100, 200) mit einer Hochtemperaturseite (24, 124, 224) und mit einer Niedertemperaturseite (26, 126, 226),
das ein Kreislaufsystem mit einem auf der Hochtemperaturseite (24, 124, 224) ausgebildeten Wärmeträgerfluid-Vorlauf für das Transportieren von Wärme von der Wärmequelle (16,116, 216) zu dem Wärmeverbraucher (22,122, 222) durch Bewegen von Wärmeträgerfluid aufweist und das einen auf der Niedertemperaturseite (26, 126, 226) ausgebildeten Wärmeträgerfluid-Rücklauf für das Transportieren von Restwärme von dem Wärmeverbraucher (22,122, 222) zu der Wärmequelle (16,116, 216) durch Bewegen von Wärmeträgerfluid aufweist,
**dadurch gekennzeichnet, dass**
für das Absenken der Temperatur T des Wärmeträgerfluids in dem Wärmeträger-Vorlauf Wärme aus in dem Wärmeträgerfluid-Vorlauf geführtem Wärmeträgerfluid auf ein in einem Arbeitsmittelkreislauf geführtem Arbeitsmittel in einem RC-System (28, 128, 228) zum Umwandeln von Wärme in mechanische Energie mit einem thermodynamischen Kreisprozess übertragen wird, das elektrische und/oder mechanische Energie bereitstellt, wobei an in dem Wärmeträgerfluid-Rücklauf geführtes Wärmeträgerfluid Restwärme aus dem Arbeitsmittel übertragen wird.

13. Verfahren nach Anspruch 12, **dadurch gekennzeichnet, dass** das Arbeitsmittel in einem Verdampfer (30, 130, 230) des RC-Systems (28, 128, 228) Wärme aus in dem Wärmeträgerfluid-Vorlauf geführtem Wärmeträgerfluid aufnimmt und das Arbeitsmittel in einem Kondensator (32, 132, 232) des RC-Systems (28, 128, 228) Restwärme an in dem Wärmeträgerfluid-Rücklauf geführtes Wärmeträgerfluid abgibt.

14. Verfahren nach Anspruch 13, **dadurch gekennzeichnet, dass** das dem Verdampfer (130) in dem Arbeitsmittelkreislauf zugeführte Arbeitsmittel mit Wärme aus in dem Wärmeträgerfluid-Vorlauf geführtem Wärmeträgerfluid vorgewärmt wird.

15. Verfahren nach einem der Ansprüche 12 bis 14 **dadurch gekennzeichnet, dass** in dem Kreislaufsystem auf der Hochtemperaturseite (112, 212) Wärme aus einem ersten Wärmeträgerfluid-Kreislauf auf einen zweiten Wärmeträgerfluid-Kreislauf mittels eines Wärmetauschers (218) übertragen wird, wobei in dem zweiten Wärmeträgerfluid-Kreislauf geführtes Wärmeträgerfluid nach dem Aufnehmen von Restwärme aus dem Arbeitsmittel in dem RC-System vor Zuführen in diesen Wärmetauscher (218) abgekühlt wird.

## Claims

1. Network (10, 100, 200) for transporting heat from a heat source (16, 116, 216) to a heat consumer (22, 122, 222), the network having a high temperature side (24, 124, 224) and having a low temperature side (26, 126, 226), having a circulatory system, which has a heat transfer fluid feed formed on the high temperature side (24, 124, 224) for transporting heat from the heat source (16, 116, 216) to the heat consumer (22, 122, 222) by moving heat transfer fluid and which has a heat transfer fluid return formed on the low temperature side (26, 126, 226) for transporting residual heat from the heat consumer (22, 122, 222) to the heat source (16, 116, 216) by moving heat transfer fluid, **characterized by** an RC system (28, 128, 228), which has a working medium circuit (33, 133, 233) connected to a heat engine (36, 136, 236), in which circuit a working medium for converting heat into mechanical energy using a thermodynamic cycle is guided, and which system contains an evaporator (30, 130, 230) for evaporating the working medium and a condenser (32, 132, 232) for condensing the working medium, the evaporator (30, 130, 230) being thermally coupled to the heat transfer fluid feed for the transfer of heat from the heat transfer fluid guided in the heat transfer fluid feed to the working medium and the condenser (32, 132, 232) being thermally coupled to the heat transfer fluid return for the transfer of residual heat from the working medium to heat transfer fluid guided in the heat transfer fluid return.

2. Network according to claim 1, **characterized in that** the circuit system has a closed heat transfer fluid circuit which is thermally coupled to the evaporator (30) and to the condenser (32) and which is connected to the heat source (16) for absorbing heat and is connected to the heat consumer (22) for emitting heat.

3. Network according to claim 1, **characterized in that** the circuit system contains a first heat transfer fluid circuit which is thermally coupled to the evaporator (130, 230) and a second heat transfer fluid circuit which is thermally coupled to the first circuit by means of a heat exchanger (118, 218) for absorbing residual heat from the condenser (132, 232).

4. Network according to claim 3, **characterized in that** the RC system (129) contains a preheater (131) fed with heat from the heat source (116) via the high temperature side (124), which preheater preheats the working medium supplied to the evaporator.

5. Network according to either claim 3 or claim 4, **characterized by** a device (219) for cooling the heat transfer fluid supplied to the heat exchanger (218).

6. Network according to claim 5, **characterized in that** the device for cooling is an air cooler (219).

7. Network according to any of claims 1 to 6, **characterized in that** water is conducted in the circulatory system as a heat transfer fluid.

8. Network according to any of claims 1 to 7, **characterized in that** the RC system is an ORC system (28, 128, 228) having a working medium circuit (33, 133, 233) which contains an organic liquid as a working medium, the lower vaporization temperature of which organic liquid is lower at atmospheric pressure than the vaporization temperature of water.

9. Network according to any of claims 1 to 8, **characterized by** a plurality of RC systems (28, 128, 228), each of which contains an evaporator (32, 132, 232) fed with heat from the heat source (16, 116, 216) via the high temperature side (24, 124, 224) and comprises a condenser (30, 130, 230), which is connected to the low temperature side (26, 126, 226) for dissipating heat, for a working medium guided in a working medium circuit for converting heat into mechanical energy using a thermodynamic cycle.

10. Network designed as a district heating network (10, 100, 200) according to any of claims 1 to 9.

11. District heating network (100) according to claim 10 having a heat source designed as a thermal power plant.

12. Method for transporting heat from a heat source (16, 116, 216) to a heat consumer (22, 122, 222), the method comprising:
providing a network (10, 100, 200) having a high temperature side (24, 124, 224) and having a low temperature side (26, 126, 226), which network has a circulatory system which has a heat transfer fluid formed on the high temperature side (24, 124, 224) for transporting heat from the heat source (16, 116, 216) to the heat consumer (22, 122, 222) by moving heat transfer fluid and which has a heat transfer fluid return formed on the low temperature side (26, 126, 226) for transporting residual heat from the heat consumer (22, 122, 222) to the heat source (16, 116, 216) by moving heat transfer fluid, **characterized in that** for lowering the temperature T of the heat transfer fluid in the heat transfer feed, heat from the heat transfer fluid guided in the heat transfer fluid feed is transferred to a working medium guided in a working medium circuit in an RC system (28, 128, 228) for converting heat into mechanical energy using a thermodynamic cycle that provides electrical and/or mechanical energy, residual heat being transferred from the working medium to the heat transfer fluid guided in the heat transfer fluid return.

13. Method according to claim 12, **characterized in that** the working medium in an evaporator (30, 130, 230) of the RC system (28, 128, 228) absorbs heat from the heat transfer fluid guided in the heat transfer fluid feed and the working medium in a condenser (32, 132, 232) of the RC system (28, 128, 228) emits residual heat to heat transfer fluid guided in the heat transfer fluid return.

14. Method according to claim 13, **characterized in that** the working medium supplied to the evaporator (130) in the working medium circuit is preheated with heat from the heat transfer fluid guided in the heat transfer fluid feed.

15. Method according to any of claims 12 to 14, **characterized in that** in the circuit system on the high temperature side (112, 212), heat from a first heat transfer fluid circuit is transferred to a second heat transfer fluid circuit by means of a heat exchanger (218), heat transfer fluid guided in the second heat transfer fluid circuit being cooled after the absorption of residual heat from the working medium in the RC system before being fed into said heat exchanger (218).

## Revendications

1. Réseau (10, 100, 200) pour le transport de chaleur d'une source de chaleur (16, 116, 216) à un consommateur de chaleur (22, 122, 222), comportant
un côté haute température (24, 124, 224) et un côté basse température (26, 126, 226),
un système en circuit présentant une amenée de fluide caloporteur réalisée sur le côté haute température (24, 124, 224) pour le transport de chaleur de la source de chaleur (16, 116, 216) au consommateur de chaleur (22, 122, 222) par le déplacement du fluide caloporteur, et présentant un retour de fluide caloporteur réalisé sur le côté basse température (26, 126, 226) pour le transport de chaleur résiduelle du consommateur de chaleur (22, 122, 222) à la source de chaleur (16, 116, 216) par le déplacement du fluide caloporteur,
**caractérisé par**
un système RC (28, 128, 228) qui présente un circuit de fluide de travail (33, 133, 233) relié à un moteur thermique (36, 136, 236) et dans lequel un fluide de travail destiné à convertir la chaleur en énergie mécanique est guidé selon un cycle thermodynamique, et qui comprend un évaporateur (30, 130, 230) pour l'évaporation du fluide de travail et un condenseur (32, 132, 232) pour la condensation du fluide de travail,
l'évaporateur (30, 130, 230) étant couplé thermiquement à l'amenée de fluide caloporteur pour le transfert de la chaleur du fluide caloporteur transporté dans l'amenée de fluide caloporteur au fluide de travail, et le condenseur (32, 132, 232) étant couplé thermiquement au retour de fluide caloporteur pour le transfert de la chaleur résiduelle, à partir du fluide de travail, au fluide caloporteur transporté dans le retour de fluide caloporteur.

2. Réseau selon la revendication 1, **caractérisé en ce que** le système en circuit comporte un circuit de fluide caloporteur fermé couplé thermiquement à l'évaporateur (30) et au condenseur (32), lequel circuit de fluide caloporteur fermé est relié à la source de chaleur (16) pour l'absorption de la chaleur et au consommateur de chaleur (22) pour la dissipation de la chaleur.

3. Réseau selon la revendication 1, **caractérisé en ce que** le système en circuit comporte un premier circuit de fluide caloporteur couplé thermiquement à l'évaporateur (130, 230) et un second circuit de fluide caloporteur couplé thermiquement au premier circuit au moyen d'un échangeur de chaleur (118, 218) pour l'absorption de la chaleur résiduelle du condenseur (132, 232).

4. Réseau selon la revendication 3, **caractérisé en ce que** le système RC (129) comprend un préchauffeur (131) alimenté en chaleur provenant de la source de chaleur (116) par l'intermédiaire du côté haute température (124), lequel préchauffeur préchauffe le fluide de travail acheminé vers l'évaporateur.

5. Réseau selon la revendication 3 ou 4, **caractérisé par** un dispositif (219) destiné à refroidir le fluide caloporteur acheminé vers l'échangeur de chaleur (218).

6. Réseau selon la revendication 5, **caractérisé en ce que** le dispositif de refroidissement est un refroidisseur d'air (219).

7. Réseau selon l'une des revendications 1 à 6, **caractérisé en ce que** l'eau est amenée dans le système en circuit comme fluide caloporteur.

8. Réseau selon l'une des revendications 1 à 7, **caractérisé en ce que** le système RC est un système ORC (28, 128, 228) comportant un circuit de fluide de travail (33, 133, 233) contenant, comme fluide de travail, un liquide organique dont la température d'évaporation inférieure sous pression atmosphérique est inférieure à la température d'évaporation de l'eau.

9. Réseau selon l'une des revendications 1 à 8, **caractérisé par** une pluralité de systèmes RC (28, 128, 228), dont chacun contient un évaporateur (32, 132, 232) alimenté en chaleur provenant de la source de chaleur (16, 116, 216) par l'intermédiaire du côté haute température (24, 124, 224) et présente un condenseur (30, 130, 230) relié au côté basse température (26, 126, 226) pour la dissipation de la chaleur destinée à un fluide de travail transporté dans un circuit de fluide de travail afin de convertir la chaleur en énergie mécanique selon un cycle thermodynamique.

10. Réseau réalisé sous la forme d'un réseau de chauffage urbain (10, 100, 200) selon l'une des revendications 1 à 9.

11. Réseau de chauffage urbain (100) selon la revendication 10, comportant une source de chaleur réalisée sous la forme d'une centrale thermique.

12. Procédé de transport de la chaleur d'une source de chaleur (16, 116, 216) à un consommateur de chaleur (22, 122, 222), comprenant :
la fourniture d'un réseau (10, 100, 200) comportant un côté haute température (24, 124, 224) et un côté basse température (26, 126, 226), lequel réseau présente une amenée de fluide caloporteur réalisée sur le côté haute température (24, 124, 224) pour le transport de chaleur de la source de chaleur (16, 116, 216) au consommateur de chaleur (22, 122, 222) par le déplacement du fluide caloporteur, et présente un retour de fluide caloporteur réalisé sur le côté basse température (26, 126, 226) pour le transport de chaleur résiduelle du consommateur de chaleur (22, 122, 222) à la source de chaleur (16,116, 216) par le déplacement du fluide caloporteur,
**caractérisé en ce que**,
pour l'abaissement de la température T du fluide caloporteur dans l'amenée de fluide caloporteur, la chaleur provenant du fluide caloporteur transporté dans l'amenée de fluide caloporteur est transférée à un fluide de travail transporté dans un circuit de fluide de travail dans un système RC (28, 128, 228) pour convertir la chaleur en énergie mécanique au moyen d'un cycle thermodynamique qui fournit de l'énergie électrique et/ou mécanique, la chaleur résiduelle provenant du fluide de travail étant transférée au fluide caloporteur transporté dans le retour de fluide caloporteur.

13. Procédé selon la revendication 12, **caractérisé en ce que** le fluide de travail dans un évaporateur (30, 130, 230) du système RC (28, 128, 228) absorbe la chaleur provenant du fluide caloporteur transporté dans l'amenée de fluide caloporteur, et le fluide de travail dans un condenseur (32, 132, 232) du système RC (28, 128, 228) communique la chaleur résiduelle au fluide caloporteur transporté dans le retour de fluide caloporteur.

14. Procédé selon la revendication 13, **caractérisé en ce que** le fluide de travail acheminé vers l'évaporateur (130) dans le circuit de fluide de travail est préchauffé par la chaleur provenant du fluide caloporteur transporté dans l'amenée de fluide caloporteur.

15. Procédé selon l'une des revendications 12 à 14, **caractérisé en ce que,** dans le système RC, du côté haute température (112, 212), la chaleur provenant d'un premier circuit de fluide caloporteur est transférée à un second circuit de fluide caloporteur au moyen d'un échangeur de chaleur (218), le fluide caloporteur transporté dans le second circuit de fluide caloporteur étant refroidi après l'absorption de la chaleur résiduelle provenant du fluide de travail dans le système RC avant l'acheminement dans ledit échangeur de chaleur (218).
